# EUROPÄISCHE PATENTSCHRIFT

(11) **EP 2 962 865 B1**
(45) Veröffentlichungstag und Bekanntmachung des Hinweises auf die Patenterteilung: **06.05.2020**
(21) Anmeldenummer: 15179922.8
(22) Anmeldetag: 14.06.2012
(51) Int. Cl.: B60B 11/02, B60K 17/04, B60K 17/16, B60B 27/00, B60B 11/06

(54) **NABENANORDNUNG, INSBESONDERE FÜR ZWILLINGSRÄDER**
HUB ASSEMBLY, IN PARTICULAR FOR DUAL WHEELS
SYSTEME DE MOYEU, EN PARTICULIER POUR ROUES JUMELEES

(30) Priorität: 27.06.2011 DE 102011078132
(43) Veröffentlichungstag der Anmeldung: 06.01.2016
(62) Teilanmeldung aus: 12734826.6
(73) Patentinhaber: Kessler & Co. GmbH & Co. KG, 73453 Abtsgmünd (DE)
(72) Erfinder: BITTLINGMAIER, Günter, 73432 Ebnat (DE); BAUER, Thomas, 73433 Aalen (DE)
(74) Vertreter: Manitz Finsterwald Patent- und Rechtsanwaltspartnerschaft mbB

(56) Entgegenhaltungen:
- EP-B1- 1 162 082
- US-A- 2 135 568
- US-B2- 7 757 795

## Beschreibung

Die Erfindung steht im Zusammenhang mit Nabenanordnungen, insbesondere für Zwillingsräder, mit zwei relativ zueinander drehbaren Nabenteilen und zugeordneter Bremsanordnung.

Es ist allgemein bekannt und üblich, an Schwerstlastfahrzeugen, beispielsweise an Hubstaplern für große Schiffscontainer, Achsen mit Zwillingsrädern vorzusehen, um extreme Tragkräfte gewährleisten zu können. Dabei ist es erwünscht, die Zwillingsräder relativ zueinander drehbar anzuordnen, um bei Wendemanövern des Fahrzeuges unerwünschten Schlupf und damit verbundenen starken Verschleiß der Bereifung der Zwillingsräder zu vermeiden. Die US 7,757,795 B2 zeigt eine für derartige Zwillingsräder geeignete Nabenanordnung bei der die die beiden Zwillingsräder tragenden Radnabenteile auf einem (dritten) Zwischennabenteil drehgelagert sind, welches seinerseits den Eingang eines die Radnabenteile treibenden Differentialgetriebes bildet. Zu diesem Zweck sind auf einem axial mittleren Abschnitt des Zwischennabenteiles Zahnräder um zum Umfang des Zwischennabenteiles senkrechte Achsen drehbar angeordnet. Diese Zahnräder kämmen mit Verzahnungsringen an den einander zugewandten Axialenden der Radnabenteile, so dass die Radnabenteile relativ zum Zwischennabenteil nur in einander entgegengesetzten Richtungen drehbar sind. Das Zwischennabenteil wird über ein Planetengetriebe angetrieben bzw. mittels einer nassen Lamellenbremse abgebremst. Um dabei auf jedes Radnabenteil ein vorgegebenes Mindestantriebsmoment bzw. Mindestbremsmoment übertragen zu können, sind zwischen dem Zwischennabenteil und den Radnabenteilen jeweils reibungsbehaftete Gleitlager vorgesehen, darüber hinaus arbeitet auch die Differentialanordnung mit konstruktiv vorgegebener Reibung.

Gleichwohl ist diese bekannte Nabenanordnung bei Bremsmanöver immer dann problematisch, wenn die Zwillingsräder aufgrund von Fahrbahnunebenheiten deutlich unterschiedlich belastet werden und eine entsprechend unterschiedliche Traktion aufweisen. Entsprechendes gilt auch dann, wenn die Zwillingsräder über Fahrbahnabschnitte mit sehr unterschiedlichen Reibkoeffizienten rollen. In allen diesen Fällen kann es passieren, dass bei einem Bremsmanöver das Zwillingsrad mit guter Traktion weitestgehend ungebremst weiter rollt, während das Zwillingsrad mit schlechter Traktion mit zum ersteren Zwillingsrad entgegengesetzter Drehrichtung durchrutscht.

Eine konstruktiv und funktional ähnliche Nabenanordnung ist Gegenstand der US 2,267,362. Hier sind konstruktive Maßnahmen zur Hemmung der Differentialanordnung zwischen den Radnabenteilen vorgesehen. In diesem Zusammenhang wird ausgenutzt, dass Zahnräder der Differentialanordnung nach Art von Zahnradpumpen hydraulische Schmiermittel in der Differentialanordnung verlagern. Dabei müssen gemäß der US 2,267,362 durch konstruktive Maßnahmen erhöhte Drosselwiderstände überwunden werden, so dass das Zwischennabenteil beim Fahr- und Bremsbetrieb jeweils entsprechende Mindestmomente auf die Radnabenteile überträgt. Gleichwohl kann unter ungünstigen Bedingungen der Fall auftreten, dass die nutzbaren Bremsmomente nur das (vergleichsweise geringe) Maß der vorgenannten Mindestmomente besitzen.

Auch die EP 1 288 054 B1 zeigt den Antrieb der Radnabenteile von Zwillingsrädern über eine Differentialanordnung. Hier sind die Radnabenteile jeweils als Hohlrad eines Planetengetriebes mit an einem stationären Planetenträger drehgelagerten Planetenrädern ausgebildet. Die Planetenräder kämmen jeweils mit einem Sonnenrad, das seinerseits über eine der Ausgangswellen der Differentialanordnung angetrieben wird. Es werden keinerlei Maßnahmen zur Übertragung von Bremskräften auf die Radnabenteile beschrieben.

Die EP 1 145 894 B1 zeigt eine Zwillingsradanordnung, bei der die Radnabenteile miteinander kraftschlüssig kuppelbar sind und nur ein Radnabenteil unmittelbar angetrieben bzw. gebremst wird. Hier muss also bei Bremsmanövern auf problematischem Untergrund immer dafür gesorgt werden, dass die Radnaben miteinander gekuppelt werden, was technisch schwierig bzw. mit hohem baulichen Aufwand verbunden ist.

Die EP 1 162 082 B1 zeigt wiederum eine Zwillingsradanordnung, deren Radnabenteile über eine Differentialanordnung angetrieben werden. Dabei ist die Differentialanordnung mit einem eingangsseitigen Untersetzungsgetriebe kombiniert, um gegebenenfalls hohe Antriebsmomente auf die Ausgangsseiten der Differentialanordnung übertragen zu können. Es werden keinerlei Maßnahmen zur Erzwingung eines Gleichlaufs der Radnaben dargestellt.

Hier setzt die Erfindung an, indem zumindest jeder von zwei Naben eine Bremsanordnung zugeordnet ist, die sich gemeinsam mit der jeweils anderen Bremsanordnung betätigen lässt.

Die US 2,135,568 A offenbart eine Nabenanordnung mit den Merkmalen des Oberbegriffs des Anspruchs 1.

Es ist Aufgabe der Erfindung, bei einer Nabenanordnung der eingangs angegebenen Art, bei der eine erste Nabe und eine zweite Nabe über eine Differentialgetriebeanordnung angetrieben werden sowie eine weitere Nabe einen Eingang der Differentialgetriebeanordnung bildet, mit absoluter Sicherheit zu gewährleisten, dass bei Betätigung der Bremsanordnung an beiden Nabenteilen vergleichbar große Bremsmomente wirksam werden.

Diese Aufgabe wird erfindungsgemäß durch eine Nabenanordnung mit den Merkmalen des Anspruchs 1 gelöst.

Insbesondere kann die Bremsanordnung den Nabenteilen zugeordnete Bremsvorrichtungen aufweisen, wobei bei Betätigung der dem einen Nabenteil zugeordneten Bremsvorrichtung auftretende Reaktionskräfte als Betätigungskraft der dem anderen Nabenteil zugeordneten Bremsvorrichtung wirken.

Die Erfindung beruht auf dem allgemeinen Gedanken, die zur Betätigung der einen Bremsvorrichtung notwendigen Kräfte über die andere Bremsvorrichtung auf stationäre Teile abzutragen. Damit werden die beiden Nabenteile zwangsläufig gemeinsam mit vergleichbaren Momenten abgebremst.

Bei einer für Zwillingsräder vorgesehenen Nabenanordnung, bei der die Radnaben über eine Differentialanordnung angetrieben werden, ist die Erfindung dadurch verwirklicht, dass die eine Bremsvorrichtung einem Radnabenteil und die andere Bremsvorrichtung einem Zwischennabenteil der Differentialanordnung zugeordnet ist.

Im Übrigen kann zum Antrieb der Radnabenteile vorgesehen sein, lediglich ein Nabenteil direkt anzutreiben und das andere Nabenteil bei Bedarf mit diesem Nabenteil kraft- und/oder formschlüssig zu kuppeln.

Bezüglich weiterer vorteilhafter Merkmale wird auf die Ansprüche und die nachfolgende Erläuterung der Zeichnung verwiesen, die das allgemeine Verständnis der Erfindung erleichtern soll, jedoch keine Ausführungsformen der Erfindung darstellt.

In der Zeichnung zeigt
- Fig. 1: einen Axialschnitt einer Ausführungsform einer Nabenanordnung,
- Fig. 2: einen Axialschnitt einer ähnlichen Ausführungsform mit zusätzlich vorgesehener Möglichkeit, bei Einsatz der Nabenanordnung für Zwillingsräder diese zu kuppeln.

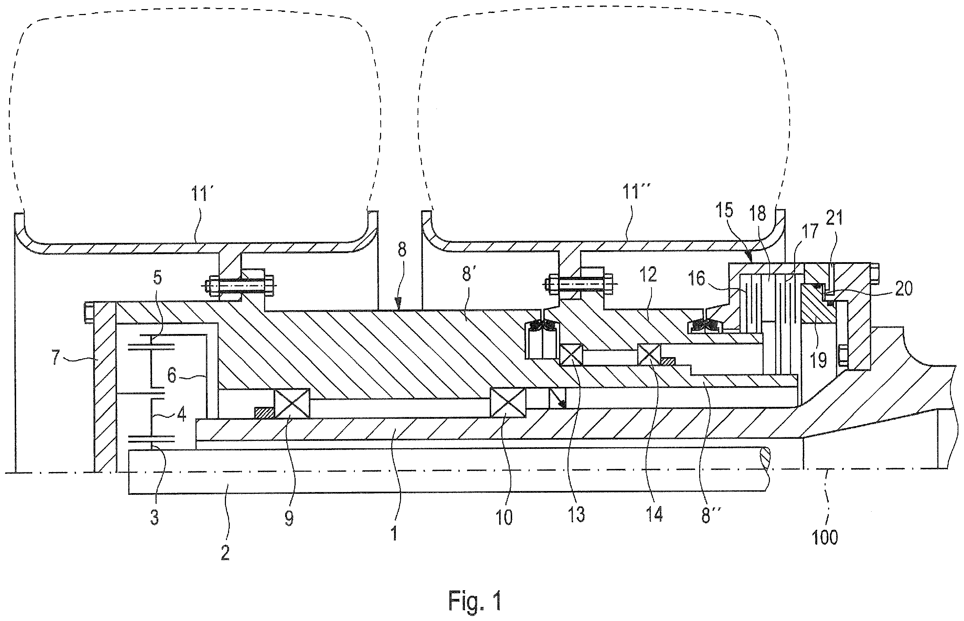

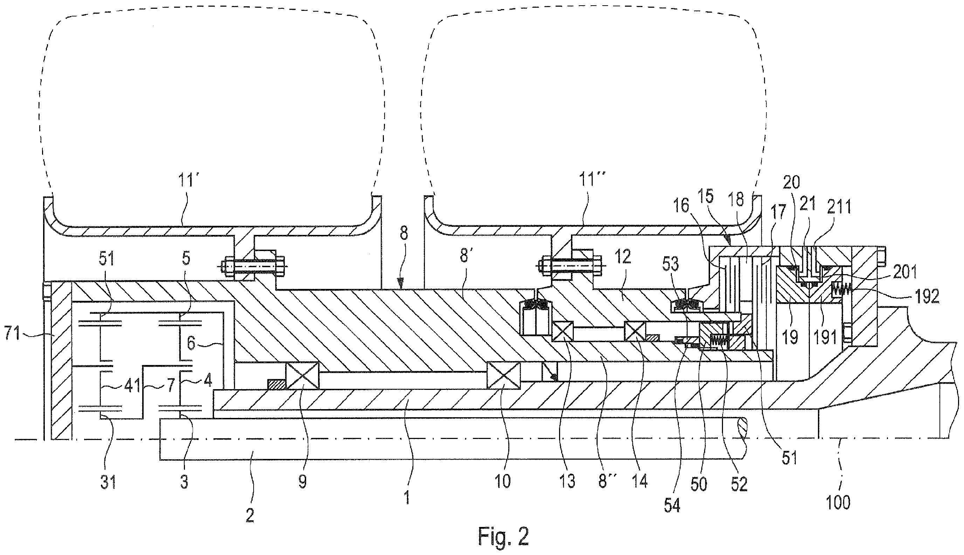

Die Schnittbilder der Fig. 1 und 2 zeigen jeweils "Halbschnitte", in denen nur der Bereich oberhalb einer zentralen Achse 100 dargestellt und der Bereich unterhalb dieser Achse 100 symmetrisch zum dargestellten Abschnitt ist.

Gemäß Fig. 1 besitzt die dargestellte Nabenanordnung ein Achsrohr 1, welches eine Antriebseingangswelle 2 aufnimmt. Diese trägt an ihrem in Figur 1 linken Ende ein formschlüssig mit der Welle 2 verbundenes Sonnenrad 3, das in grundsätzlich bekannter Weise mit Planetenrädern 4 kämmt, die in einem innenseitig verzahnten Hohlrad 5 umlaufen, welches mittels eines glockenartigen Trägers 6 drehfest mit dem Achsrohr 1 verbunden ist. Die Planetenräder 4 sind auf Achszapfen eines Planetenträgers 7 drehgelagert, der seinerseits mit einem Nabenteil 8 drehfest verbunden ist, welches auf Wälzlagern 9 und 10 drehgelagert ist, die auf dem Achsrohr 1 bzw. einem zylindrischen Fortsatz (nicht dargestellt) des auf dem Achsrohr 1 angeordneten Hohlradträgers 6 angeordnet sind.

Das Nabenteil 8 besitzt einen auf den Lagern 9 und 10 abgestützten Abschnitt 8' und einen über das Lager 10 axial hinausragenden Abschnitt 8". Dabei dient der linke Abschnitt 8' zur Halterung der Felge 11' eines äußeren Zwillingsrades. Der rechte Abschnitt 8" des Nabenteiles 8 trägt ein weiteres Nabenteil 12, welches auf dem Abschnitt 8" des Nabenteils 8 mittels dort angeordneter Wälzlager 13 und 14 drehgelagert ist. Das Nabenteil 12 besitzt einen gleichen Außendurchmesser wie das Nabenteil 8 im Bereich der Felge 11'. Dementsprechend kann eine gleichartige Felge 11" für ein inneres Zwillingsrad am Nabenteil 12 angeordnet werden. Am in Figur 1 rechten Ende des Achsrohrs 1 ist ein damit fest verbundenes Bremsgehäuse 15 angeordnet, welches auf seiner den Nabenteilen 8 und 12 zugewandten Seite offen ist, derart, dass zwischen dem Außenumfang des Achsrohres 1 und dem Rand der Öffnung des Bremsgehäuses 15 eine Ringöffnung gebildet wird, durch die die Nabenteile 8 und 12 mit zylinderartigen axialen Endbereichen hindurchragen. Dabei ragt der axiale Endbereich des Nabenteiles 8 bzw. des Teiles 8" in axialer Richtung weiter in das Bremsgehäuse 15 hinein als der radial darüber angeordnete axiale Endbereich des Nabenteiles 12.

Radial zwischen dem Innenumfang des Bremsgehäuses 15 und dem Außenumfang des axialen Endbereiches des Nabenteiles 12 bzw. des axialen Endbereiches des Nabenteiles 8 sind jeweils Bremslamellenpakete 16 und 17 angeordnet, die jeweils aus bremsgehäuseseitigen Bremslamellen, welche in einer Innenumfangsverzahnung des Bremsgehäuses axial verschiebbar jedoch drehfest angeordnet sind, und nabenseitigen Bremslamellen bestehen, welche in analoger Weise an Außenumfangsverzahnungen der Axialenden der Nabenteile 8 bzw. 12 drehfest, jedoch axial verschiebbar angeordnet sind. Dabei sind in bekannter Weise jeweils bremsgehäuseseitige und nabenteilseitige Bremslamellen abwechselnd in axialer Nachbarschaft angeordnet, das heißt eine nabenteilseitige Bremslamelle ist jeweils axial zwischen zwei bremsgehäuseseitigen Bremslamellen angeordnet. Axial zwischen den Bremslamellenpaketen 16 und 17 ist an der bremsgehäuseseitigen Innenverzahnung eine Ringplatte 18 axial verschiebbar und drehfest angeordnet.

Innerhalb des Bremsgehäuses 15 ist des Weiteren ein axial verschiebbarer Ringkolben 19 angeordnet, dessen in Figur 1 rechtes Ende stufenförmig ausgebildet ist, derart, dass im Bereich der Kolbenstufe zwischen der Bremsgehäusewandung und dem Ringkolben 19 eine Ringkammer 20 gebildet wird, die über eine Bohrung 21 mit Druckfluid steuerbar beaufschlagt werden kann. Damit wird der Ringkolben mit entsprechender Kraft gegen den Widerstand einer Rückstellfederanordnung (nicht dargestellt) axial gegen die Bremslamellenpakete 16 und 17 geschoben, wobei der auf das Bremslamellenpaket 17 ausgeübte axiale Druck des Ringkolbens 19 über die axial verschiebbare Ringplatte 18 auf das Bremslamellenpaket 16 und nachfolgend auf das stationäre Bremsgehäuse 15 abgetragen wird. Im Ergebnis werden damit beide Bremslamellenpakete 16 und 17 bremswirksam, so dass beide Nabenteile 8 und 12 mit den darauf angeordneten Zwillingsrädern 11' bzw. 11" simultan abgebremst werden.

Die Ausführungsform der Fig. 2 unterscheidet sich von der Ausführungsform der Fig. 1 zunächst dadurch, dass die Antriebseingangswelle 2 und das Nabenteil 8 über ein zweistufiges Planetengetriebe miteinander antriebsverbunden sind. Die Antriebseingangswelle 2 trägt wiederum ein mit ihr drehfest verbundenes Sonnenrad 3, welches mit Planetenrädern 4 kämmt, die ihrerseits in einem innenverzahnten Hohlrad 5 umlaufen. Die Planetenräder 4 sind wiederum auf Achszapfen des Planetenträgers 7 drehgelagert. Dieser Planetenträger 7 ist drehfest mit einem weiteren Sonnenrad 31 verbunden, welches mit Planetenräder 41 kämmt, die in einem innenverzahnten Hohlrad 51 umlaufen, welches ebenso wie das Hohlrad 5 über den glockenförmigen Träger 6 stationär am Achsrohr 1 gehaltert ist. Die Hohlräder 5 und 51 bilden in der Regel ein einziges Hohlrad, welches eine entsprechende axiale Breite aufweist und dementsprechend mit einem in der Zeichnung rechten Axialabschnitt mit den Planetenrädern 4 und mit einem in der Zeichnung linken Axialabschnitt mit den Planetenräder 41 zusammenwirkt. Die Planetenräder 41 sind auf Achszapfen eines Planetenträgers 71 drehgelagert, der seinerseits drehfest mit dem Nabenteil 8 verbunden ist.

Innerhalb des Bremsgehäuses 15 sind ein erster und ein zweiter Ringkolben 19 und 191 angeordnet, wobei der Ringkolben 19 wiederum durch Druckbeaufschlagung der Ringkammer 20 axial gegen die Bremslamellenpakete 16 und 17 geschoben werden kann, so dass die Nabenteile 8 und 12 zwangsläufig simultan gebremst werden. Der weitere Ringkolben 191 wird durch Federn 192 gegen die zugewandte Stirnseite des Ringkolbens 19 geschoben, derart, dass die vorgenannten Bremslamellenpakete 16 und 17 wiederum axial zusammengepresst und dadurch bremswirksam werden. Durch Druckbeaufschlagung einer Ringkammer 201 , die über eine Bohrung 211 mit Druckfluid beaufschlagt werden kann, kann der Ringkolben 191 gegen die Kraft von Federn 192 nach rechts verschoben werden, so dass der Ringkolben 19 vom Ringkolben 191 entlastet wird und die Bremslamellenpakete 16 und 17 nur noch dann bremswirksam in Axialrichtung zusammenpressen kann, wenn die dem Ringkolben 19 zugeordnete Ringkammer 20 über die Bohrung 21 mit Druckfluid beaufschlagt wird. Durch die dargestellte Doppelkolbenanordnung 19, 191 kann also einerseits eine automatische Feststellbremse gewährleistet werden, wenn die Ringkammer 201 drucklos ist und der Ringkolben 191 durch die Federn 192 axial gegen den Ringkolben 19 drückt. Beim Fahrbetrieb wird die Ringkammer 201 mit Druck beaufschlagt, so dass der Ringkolben 191 axial vom Ringkolben 19 abgerückt bzw. beabstandet gehalten wird und die Bremslamellenpakete 16 und 17 nur noch dann bremswirksam werden, wenn die dem Ringkolben 19 zugeordnete Ringkammer 20 mit Druck beaufschlagt wird.

Im Übrigen ist bei der Ausführungsform der Fig. 2 die Möglichkeit gegeben, die Nabenteile 8 und 12 miteinander formschlüssig zu kuppeln: Dazu ist am Nabenteil 8 ein Klauenring 50 axial verschiebbar, jedoch drehfest angeordnet, und das Nabenteil 12 ist fest mit einem Klauenring 51 verbunden. Diese Klauenringe sind einander mit stirnseitig angeordneten Klauen zugewandt. Der Klauenring 50 kann gegen die Kraft einer Rückstellfederung 52 axial mittels eines Ringkolbens 53 gegen den Klauenring 51 geschoben werden, so dass die Klauen der beiden Ringe 50 und 51 in Eingriff gelangen. Der Ringkolben 53 ist auf seiner vom Klauenring 50 abgewandten Seite als Stufenkolben ausgebildet und begrenzt zusammen mit einer entsprechend stufenförmigen Außenumfangsfläche am Nabenteil 8 einen Ringraum 54, der über eine nicht dargestellte Bohrung im Nabenteil 8 oder eine ebenfalls nicht dargestellte Druckdurchführung im Achsgehäuse mit einem Druckfluid beaufschlagt bzw. vom Druckfluid entlastet werden kann, d.h. bei Druckbeaufschlagung des Ringraumes 54 wird der Klauenring 50 zum Eingriff mit dem Klauenring 51 gebracht, so dass die beiden Klauenringe 50 und 51 und dementsprechend die Nabenteile 8 und 12 miteinander formschlüssig gekuppelt werden. Bei Druckentlastung des Ringraumes 54 schiebt die Rückstellfederung 52 den Klauenring 50 wieder in die dargestellte linke Endlage, in der die Klauenringe 50 und 51 voneinander entkuppelt sind und die Nabenteile 8 und 12 relativ zueinander drehen können. Bei Bedarf können also die Nabenteile 8 und 12 und dementsprechend die Felgen 11' und 11" einer Zwillingsradanordnung simultan im Gleichlauf angetrieben werden.

Abweichend von der Darstellung der Fig. 1 und 2 könnte die Nabe 12 statt über die Wälzlager 13 und 14 auch über die Gleitlager auf der Nabe 8 drehgelagert sein, so dass die beiden Naben 8 und 12 immer durch einen von der Reibung der Gleitlager vorgegebenen Kraftschluss miteinander gekuppelt bleiben.

Bezüglich der Montage der Felgen 11' und 11" an den Naben 8 und 12 besteht eine vorteilhafte Möglichkeit darin, Felgen 11' und 11" von Zwillingsrädern an axial benachbarten Naben 8, 12 mit gleichen Außendurchmessern anzuordnen.

Abweichend von den anhand der Fig. 1 und 2 erläuterten Ausführungsformen bezieht sich die Erfindung auf eine Nabenanordnung, insbesondere für Zwillingsräder, mit zwei relativ zueinander drehbaren Naben und zugeordneter Bremsanordnung, wobei die beiden Naben als Ausgangsseiten einer Differentialgetriebeanordnung angeordnet sind, deren Eingang als weitere Nabe ausgebildet ist, und wobei bei Betätigung einer Bremsvorrichtung einer ausgangsseitigen Nabe zwangsläufig eine Bremsvorrichtung der weiteren Nabe betätigt wird.

## Patentansprüche

1. Nabenanordnung, insbesondere für Zwillingsräder,
mit einer ersten Nabe und einer zweiten Nabe, die relativ zueinander drehbar sind und über eine Differentialgetriebeanordnung angetrieben werden, sowie einer weiteren Nabe, welche einen Eingang der Differentialgetriebeanordnung bildet, wobei der ersten Nabe und der weiteren Nabe jeweils eine Bremsvorrichtung zugeordnet ist, die gemeinsam mit der jeweils anderen Bremsvorrichtung betätigbar ist, **dadurch gekennzeichnet,**
**dass** die zur Betätigung der einen Bremsvorrichtung notwendigen Kräfte über die andere Bremsvorrichtung auf stationäre Teile der Nabenanordnung abgetragen werden.

2. Nabenanordnung nach Anspruch 1,
wobei bei Betätigung einer der genannten Bremsvorrichtungen auftretende Reaktionskräfte die andere der genannten Bremsvorrichtungen zwangsweise betätigen.

3. Nabenanordnung nach Anspruch 1 oder 2,
wobei die genannte andere Bremsvorrichtung ein Widerlager bildet, welches die Bremsbetätigungskraft der genannten einen Bremsvorrichtung auf die stationären Teile der Nabenanordnung abträgt.

4. Nabenanordnung nach einem der Ansprüche 1 bis 3,
wobei die erste Nabe und die zweite Nabe Radnaben sind, und wobei die weitere Nabe eine Zwischennabe ist.

## Claims

1. A hub arrangement, in particular for twin wheels,
comprising a first hub and a second hub which are rotatable relative to one another and which are driven via a differential gear arrangement; and a further hub which forms an input of the differential gear arrangement, wherein the first hub and the further hub are each assigned a braking device which is actuable jointly with the respective other braking device, **characterized in that**
the forces which are necessary for actuating the one braking device are discharged to stationary parts of the hub arrangement via the other braking device.

2. A hub arrangement in accordance with claim 1,
wherein reaction forces which occur when one of said braking devices is actuated necessarily actuate the other one of said braking devices.

3. A hub arrangement in accordance with claim 1 or claim 2,
wherein said other braking device forms an abutment which discharges the braking actuation force of said one braking device to the stationary parts of the hub arrangement.

4. A hub arrangement in accordance with any one of the claims 1 to 3,
wherein the first hub and the second hub are wheel hubs, and wherein the further hub is an intermediate hub.

## Revendications

1. Ensemble de moyeux, en particulier pour des roues jumelées, comportant un premier moyeu et un second moyeu rotatifs l'un par rapport à l'autre et entraînés par un ensemble différentiel mécanique, ainsi qu'un moyeu supplémentaire qui constitue l'entrée de l'ensemble différentiel mécanique,
un dispositif de freinage respectif étant associé au premier moyeu et au moyeu supplémentaire, dispositif qui peut être actionné conjointement avec l'autre dispositif de freinage respectif,
**caractérisé en ce que**
les forces nécessaires pour actionner l'un des dispositifs de freinage sont transférées à des parties stationnaires de l'ensemble de moyeux par l'intermédiaire de l'autre dispositif de freinage.

2. Ensemble de moyeux selon la revendication 1,
dans lequel
les forces de réaction qui apparaissent lors de l'actionnement de l'un desdits dispositifs de freinage provoquent un actionnement forcé de l'autre desdits dispositifs de freinage.

3. Ensemble de moyeux selon la revendication 1 ou 2,
dans lequel
ledit autre dispositif de freinage constitue une contrebutée qui transfère la force d'actionnement de freinage dudit dispositif de freinage à des parties stationnaires de l'ensemble de moyeux.

4. Ensemble de moyeux selon l'une des revendications 1 à 3,
dans lequel
le premier moyeu et le second moyeu sont des moyeux de roue, et le moyeu supplémentaire est un moyeu intermédiaire.
